# EUROPÄISCHE PATENTANMELDUNG

(11) **EP 1 661 452 A1**
(43) Veröffentlichungstag der Anmeldung: **31.05.2006**
(21) Anmeldenummer: 04405719.8
(22) Anmeldetag: 22.11.2004
(51) Int. Cl.: A01J 25/16, A23C 19/14

(54) **Salzbadbrett**

(71) Anmelder: Bernhardt Inter Engineering Corp. AG, 4303 Kaiseraugst (CH)
(72) Erfinder: Ingolf, Bernhardt, 4303 Kaiseraugst (CH)
(74) Vertreter: Heinen, Detlef

(57) **Zusammenfassung**

Ein Salzbadbrett (3) aus einem lebensmittelverträglichen Kunststoff als Auflage für einen Käselaib im Salzbad weist mindestens zwei miteinander zu einem geschlossenen Salzbadbrett verbundene Brettteile (32,33) auf. Diese sind auf ihren nach aussen weisenden Auflageflächen (30) jeweils mit einer Struktur (300) versehen, die durch Tiefziehen oder andere Verfahren hergestellt ist. Die zu dem Salbadbrett verbundenen Brettteile (32,33) umschliessen einen Hohlraum (35), in welchem ein Füllkörper aus hochbelastbaren gehärteten Füllschaum (F) oder Füllmittel angeordnet ist, der den Hohlraum (35) vollständig ausfüllt. Das Salzbadbrett wird verwendet zur Lagerung eines Käserohlings (K) im Salzbad (2) zur Bildung einer Käsekruste.

## Beschreibung

Die Erfindung betrifft ein Salzbadbrett sowie ein Verfahren zur Behandlung eines Käserohlings zur Bildung einer Käsekruste und schliesslich die Verwendung eines Salzbadbrettes zur Lagerung eines Käserohlings in einem Salzbad zwecks Bildung einer Käsekruste gemäss dem jeweiligen unabhängigen Patentanspruch.

Bei der Herstellung von Hartkäsen wird in bekannter Weise nach der Formung des von der Konsistenz her quarkähnlichen Käserohlings der Käserohling in ein Salzbad eingebracht. Dort wird der Käserohling für eine vorgegebene Zeit gelagert, wodurch sich dadurch, dass der Käserohling dem Salzbad ausgesetzt ist, zur Unterstützung die wohlbekannte Käsekruste bilden kann. Anschliessend wird der Käserohling aus dem Salzbad entnommen, die Käsekruste wird gereinigt und getrocknet, und schliesslich wird der Käserohling für einen Zeitraum von zumeist einigen wenigen Wochen gelagert, damit er reifen kann und für den Verzehr geeignet ist.

Bisher werden zur Bildung der Käsekruste die Käserohlinge auf den Boden des Behälters abgelegt, in welchem sich das Salzbad befindet und nach Ablauf der vorgegebenen Zeitdauer, also nach dem Bilden der Käsekruste, wieder aus dem Behälter entnommen. Das hat jedoch den Nachteil, dass die Käsekruste am Boden des Behälters oder an den jeweiligen Lagerhilfsmitteln anhaften kann, wodurch das Entnehmen des Käserohlings (mit Kruste) erschwert wird. Ausserdem kann sich der Käserohling im Behälter verschieben, so dass bei einer automatischen oder halbautomatischen Entnahme zuerst seine genaue Position ermittelt werden muss, bevor er entnommen werden kann. Als Materialien werden dabei bisher Materialien wie z.B. Holz oder Edelstahl eingesetzt, welche preislich uninteressant sind.

Gemäss der Erfindung wird vorgeschlagen, den Käserohling zwecks Bildung einer Kruste im Salzbad auf einem speziell ausgebildeten Salzbadbrett, wie es im unabhängigen Patentanspruch 1 spezifiziert ist, zu lagern. Das hierzu erfindungsgemäss vorgesehene Salzbadbrett ist im unabhängigen Anspruch 1 spezifiziert. Vorteilhafte Weiterbildungen des erfindungsgemässen Salzbadbrettes ergeben sich aus den abhängigen Patentansprüchen 2 bis 4. Schliesslich erstreckt sich die Erfindung auch auf die Verwendung eines solchen Salzbadbrettes zur Lagerung eines Käserohlings in einem Salzbad zwecks Bildung der Käsekruste.

Weitere vorteilhafte Aspekte des erfindungsgemässen Salzbadbrettes, des Verfahrens zur Bildung der Käsekruste unter Verwendung der erfindungsgemässen Salzbadbretter sowie der Verwendung des erfindungsgemässen Salzbadbrettes zur Lagerung des Käserohlings ergeben sich aus der nachfolgenden Beschreibung mit Hilfe der Zeichnung. Es zeigen:
- Fig. 1: in schematischer Darstellung ein Behälter mit einem Salzbad, in welchem Käserohlinge zwecks Bildung einer Käsekruste eingelagert sind,
- Fig. 2: eine Aufsicht von oben auf die Aussenfläche eines Ausführungsbeispiels des erfindungs-gemässen Salzbadbrettes,
- Fig. 3: eine Ansicht des Brettrandes des Salzbadbrettes aus Fig. 2,
- Fig. 4: einen Schnitt durch das Salzbadbrett aus Fig. 2
und
- Fig. 5: einen vergrössert dargestellten Ausschnitt des Schnitts gemäss Fig. 4.

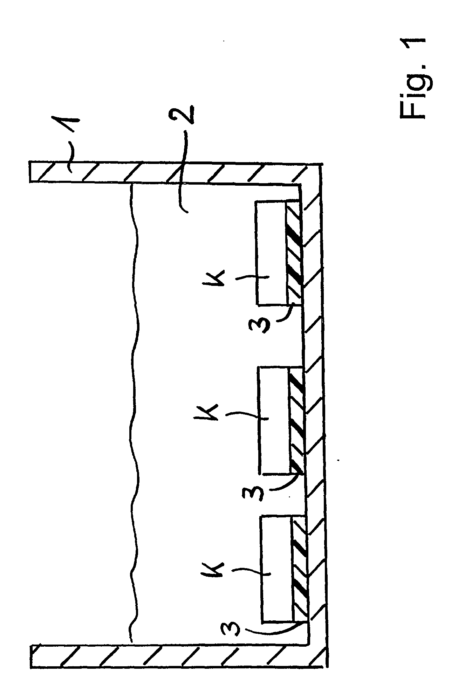

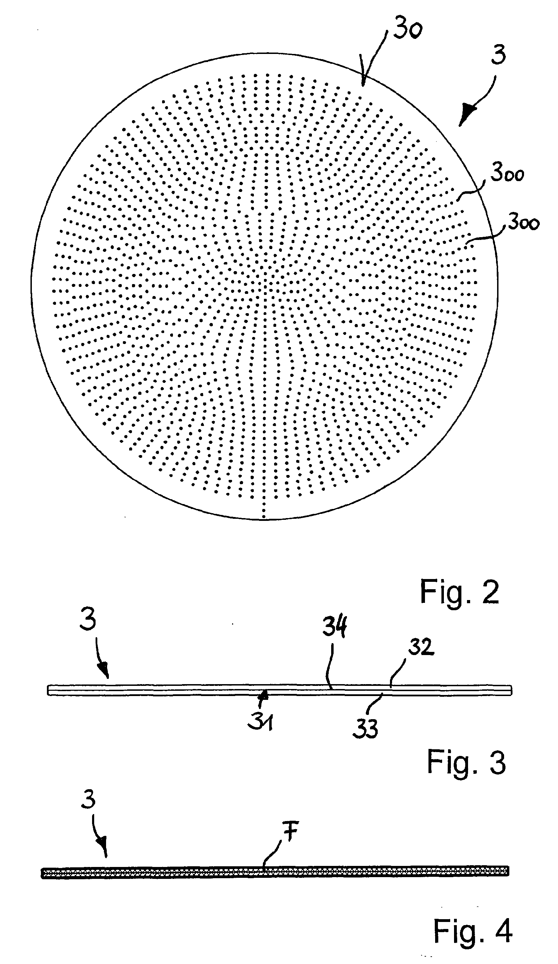

In **Fig. 1** ist schematisch ein Behälter 1 mit einem Salzbad 2 dargestellt, in welchem mehrere Käserohlinge K (Laibe) angeordnet sind, die jeweils auf einem Ausführungsbeispiel des erfindungsgemässen Salzbadbrettes 3 aus einem lebensmittelverträglichen Kunststoff aufliegen. Prinzipiell können auch mehrere solcher Käserohlinge K stapelartig aufeinander liegen, wobei unter dem am Boden angeordneten Käserohling K und unter jedem weiteren darüber geschichteten Käserohling jeweils ein entsprechendes Salzbadbrett 3 angeordnet ist (hier nicht dargestellt). Die Auflagefläche 30 des Salzbadbrettes 3 (siehe z.B. Fig. 2) ist strukturiert ausgebildet und kann insbesondere eine Vielzahl von Noppen 300 (oder einer sonstigen Struktur) aufweisen. Diese Noppen 300 (bzw. Struktur) sind durch Tiefziehen hergestellt (können aber auch durch anderen Verfahren hergestellt sein) und dienen dazu, ein Anhaften des Käserohlings K zu verhindern, aber gleichzeitig auch zur Verhinderung eines Verrutschens des Käserohlings K.

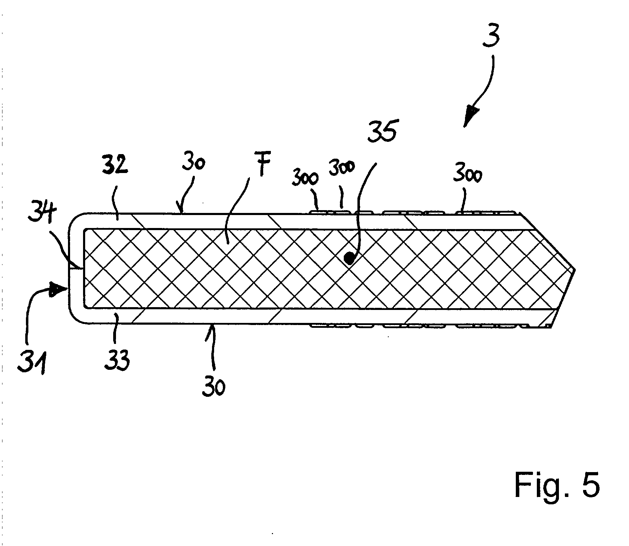

In **Fig. 2** ist das Salzbadbrett 3 in einer Aufsicht auf die Auflagefläche 30 dargestellt, während **Fig. 3** eine Ansicht des Brettrandes 31 zeigt, und **Fig. 4** einen Schnitt durch das Salzbadbrett 3, während in **Fig. 5** ein Ausschnitt aus Fig. 4 vergrössert zu erkennen ist. Das Salzbadbrett 3 umfasst bei dem hier gezeigten Ausführungsbeispiel zwei Brettteile 32 und 33 (Halbschalen), die hier an einer umlaufenden "Naht" 34 miteinander verklebt und somit verbunden sind. Die Ausführung kann rund, eckig oder in anderen geometrischen Formen erfolgen. Je nach Wahl des Kunststoffs können die beiden Brettteile 32 und 33 an der Naht auch durch Schweissen oder Kleben verbunden sein.

Grundsätzlich kommt auch in Frage, das Salzbadbrett 3 aus mehr als zwei Brettteilen herzustellen, bei zwei Brettteilen ist allerdings die Herstellung des Salzbadbrettes besonders einfach. Wie bereits erwähnt, werden die beiden Brettteile 32 und 33 miteinander durch Kleben (oder Schweissen) verbunden. Der Brettrand 31 oder die Fläche 30 sind mit Öffnungen (nicht dargestellt) versehen, durch deren eine Öffnung hindurch ein Füllschaum F (oder auch ein anderes Füllmittel) in den Hohlraum 35, der zwischen den beiden Brettteilen 32 und 33 eingeschlossen wird, eingebracht wird, während durch die andere Öffnung hindurch die im Innenraum befindliche Luft ausgetrieben wird. Der Füllschaum F (oder das Füllmittel) können dann im Hohlraum 35 aufschäumen und/oder aushärten. Bei weicheren Kunststoffen können dabei Pressplatten vorgesehen sein, die verhindern, dass der aufschäumende Füllschaum F (oder das Füllmittel) die Brettteile 32 und 33 verformen. Ist der Füllschaum F (oder das Füllmittel) vollständig ausgehärtet, wird der Hohlraum 35 vollständig von einem gehärteten Füllkörper (der durch Aushärten des Füllschaums oder Füllmittels entsteht) ausgefüllt, damit er auch ausreichend stabil ist, um die Last eines oder mehrerer Käserohlinge (im Falle von gestapelten Rohlingen) tragen zu können, ohne sich dabei zu verformen.

Die Noppen 300 in den Auflageflächen 30 der einzelnen Brettteile 32 bzw. 33 können durch Tiefziehen (oder andere Verfahren) hergestellt sein, was besonders einfache Herstellungsverfahren sind, andererseits aber einen hinreichend elastisch verformbaren Kunststoff voraussetzen. Weiterhin muss der Kunststoff "lebensmittelverträglich" sein, d.h. er muss insbesondere auch für die Behandlung von Lebensmitteln und insbesondere von Käse zugelassen sein. Beispiele für solche Kunststoffe sind Acryl-Butadien-Styrol (zum Verkleben an der Naht) oder Polyethylen bzw. Polypropylen (zum Verschweissen an der Naht). Schliesslich müssen die Kunststoffe auch korrosionsbeständig sein im Salzbad.

Als Füllschaum F (oder Füllmittel) zum Einspritzen in den Hohlraum 35 kommt in vorteilhafter Weise ein KunststoffSchaum in Betracht, der ein sogenannter "geschlossenporiger" Schaum ist (die einzelne Poren sind für sich alle geschlossen, also nicht miteinander verbunden). Dies bringt der Vorteil mit sich, dass für den Fall, dass ein Brettteil (Halbschale) einmal verletzt wird, sich der Füllkörper nicht mit der Flüssigkeit des Salzbads voll saugen kann. Es können aber auch andere Füllschäume oder Füllmittel verwendet werden, die geschlossenporig sind, die hinreichend aufschäumen, damit sie nach dem Verbinden der Brettteile 32,33 in den Hohlraum 35 eingespritzt werden können und ausreichend aufschäumen, und die nach ihrem Aushärten ausreichend stabil sind, um die entsprechenden Lasten tragen zu können (siehe oben).

## Patentansprüche

1. Salzbadbrett (3) aus einem lebensmittelverträglichen Kunststoff als Auflage für einen Käselaib im Salzbad, welches mindestens zwei miteinander zu einem geschlossenen Salzbadbrett verbundene Brettteile (32,33) aufweist, die auf ihren nach aussen weisenden Auflageflächen (30) jeweils mit einer Struktur (300) versehen sind, die durch Tiefziehen oder andere Verfahren hergestellt ist, wobei die zu dem Salzbadbrett verbundenen Brettteile (32,33) einen Hohlraum (35) umschliessen, in welchem ein Füllkörper aus hochbelastbaren gehärteten Füllschaum (F) oder Füllmittel angeordnet ist, der den Hohlraum (35)vollständig ausfüllt.

2. Salzbadbrett nach Anspruch 1, bei welchem das Salzbadbrett an seinem umlaufenden Brettrand (31) Öffnungen aufweist, durch deren eine Öffnung hindurch bei der Herstellung des Salzbadbrettes der noch nicht gehärtete Füllschaum (F) oder das Füllmittel in den Hohlraum eingebracht worden ist, der dann im Hohlraum (35) aushärtet und so den Füllkörper bildet.

3. Salzbadbrett nach einem der Ansprüche 1 oder 2, bei welchem der Füllschaum (F) oder das Füllmittel geschlossenporig ist.

4. Salzbadbrett nach einem der Ansprüche 1 bis 3, **dadurch gekennzeichnet, dass** die Struktur auf den Auflageflächen (30) des Salzbadbrettes eine Vielzahl von Noppen (300) umfasst.

5. Verfahren zur Behandlung eines Käserohlings zur Bildung einer Käsekruste, bei welchem Verfahren der Käserohling (K) für eine vorgegebene Zeitdauer in einem Salzbad (2) gelagert wird, wodurch sich die Käsekruste bilden kann, wobei der Käserohling (K) im Salzbad (2) auf einem Salzbadbrett (3) nach einem der Ansprüche 1 bis 4 gelagert wird.

6. Verwendung eines Salzbadbrettes (3) nach einem der Ansprüche 1 bis 4 zur Lagerung eines Käserohlings (K) im Salzbad (2) zwecks Bildung einer Käsekruste.
